# FASCICULE DE BREVET EUROPEEN

(11) **EP 0 449 715 B1**
(45) Date de publication et mention de la délivrance du brevet: **04.01.1995**
(21) Numéro de dépôt: 91400794.3
(22) Date de dépôt: 25.03.1991
(51) Int. Cl.: H04N 7/24

(54) **Dispositif de codage/décodage de signaux d'image**
Einrichtung zur Kodierung/Dekodierung von Bildsignalen
Coding/decoding device for image signals

(30) Priorité: 26.03.1990 FR 9003817
(43) Date de publication de la demande: 02.10.1991
(73) Titulaire: FRANCE TELECOM, 92131 Issy les Moulineaux (FR)
(72) Inventeur: Guichard, Jacques, F-75015 Paris (FR); Eude, Gérard, F-77200 Torcy (FR)
(74) Mandataire: Dubois-Chabert, Guy

(56) Documents cités:
- GB-A- 2 211 691
- NTZ - NACHRICHTENTECHNISCHE ZEITSCHRIFT, vol. 42, no. 3, mars 1989, pages 130-133, Berlin, DE; F. MAY: "Algorithmen und Realisierung eines ISDN-Bildtelefon-Codecs"
- FREQUENZ, vol. 43, no. 3, mars 1989, pages 70-78, Berlin, DE; H. AMOR et al.:"Ein Lösungsweg zur Übertragung von Bewegtbildern im Schmalband-ISDN"
- NTZ - NACHRICHTENTECHNISCHE ZEITSCHRIFT, vol. 42, no. 3, mars 1989, pages 136-138,140-142,144,145, Berlin, DE; D. BIERE et al.: "Video-Codec und Endgeräte für das ISDN-Bildtelefon"
- ICASSP'89, Glasgow, 23-26 mai 1989, vol. 3, pages 1929-1932, IEEE, New York,US; T. MURAKAMI et al.: "A 24bit DSP for motion video codec and software development support system"
- IEEE, NTC RECORD, Houston, 4-6 décembre 1972, pages 4D-1 - 4D-6; S.N. FRIEDMAN: "Videovoice"
- ELECTRONIC ENGINEERING, vol. 61, no. 751, July 1989, pages 39-40,42,44; D.J.BAILEY et al.: "Image compression using a discrete cosine transform image processor"

## Description

La présente invention a pour objet un dispositif de codage-décodage de signaux d'image. Cette invention concerne un dispositif apte à traiter en temps réel des signaux d'information de type séquentiel, tels que les signaux vidéo, dans le but de comprimer le volume des données nécessaires pour représenter l'image correspondante, afin de la transmettre avec un débit binaire minimum au moyen d'un réseau de transmission.

Le dispositif selon l'invention s'applique notamment en télévision, en visioconférence ou en visiophonie. Il peut également être appliqué aux images à variation lente telle qu'en télésurveillance.

En ce qui concerne les techniques de compression d'image, on pourra se reporter par exemple à l'article paru dans l'Echo des Recherches No 126, du quatrième trimestre 1986, intitulé "l'image numérique et le codage".

On pourra également se reporter aux documents EP-A2-0 084 4270, EP-A2-0 123 456 et US-A-4 185 188, dans lesquels sont décrits différents systèmes de codage d'image.

Dans ces systèmes de codage d'image, et de manière générale dans les systèmes de codage d'image récents, on exploite au maximum la redondance temporelle du signal d'image, c'est-à-dire que pour coder une image on tient compte de l'image précédente.

On rappelle toutefois qu'un premier type de codage connu, appelé codage inter-image consiste à comparer l'image à coder à l'image précédente et à ne transmettre après codage que des informations relatives à la partie de l'image qui est en mouvement. Un autre type de codage connu, appelé codage par estimation du mouvement, consiste à anticiper le mouvement dans l'image en estimant une image au vu de l'image précédente et à ne transmettre que des informations relatives à la différence entre cette image estimée et l'image effectivement reçue.

On rappelle également que, de manière classique, le système de codage d'image comprend un moyen de transformation pour appliquer un opérateur de transformation à ladite image. Cette opération de transformation traduit l'image du domaine spatial dans un domaine dit fréquentiel. L'opération de transformation peut précéder ou suivre le codage interimage ou par estimation de mouvement appliqué à l'image.

On rappelle également qu'en pratique une image est divisée en une pluralité de blocs avant d'être traitée, soit par le moyen de codage inter-image ou par estimation du mouvement, soit par l'opérateur de transformation, ceci permet de mieux cerner les parties de l'image qui sont modifiées entre deux images successives, et donc de réduire le débit envoyé sur le réseau de transmission, puisque seules ces parties modifiées sont codées et transmises.

Cette transmission consiste d'ailleurs dans le cas du codage par estimation de mouvement à émettre, pour chaque bloc ou mouvement, un vecteur de déplacement indiquant le déplacement du bloc entre l'image précédente et l'image courante. Il est usuel de décomposer les images en blocs identiques de taille couramment utilisée telle que 8 x 8 pixels, 16 x 16 pixels et parfois 32 x 32 pixels. Le facteur de compression est d'autant meilleur que les blocs sont grands, mais le gain de compression est plus faible lorsque l'on passe de 16 à 32 pixels et lorsque l'on passe de 8 à 16 pixels.

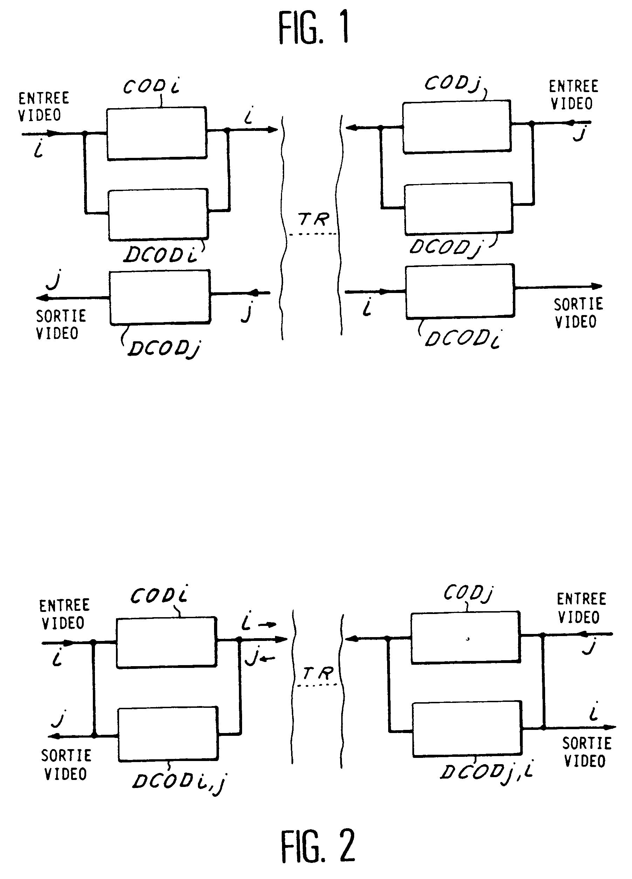

Comme on peut le voir sur la figure 1, un codeur-décodeur classique comporte une voie de codage CODi, DCODi pour réduire le débit d'une image i à transmettre sur le réseau TR et une voie de décodage DCODj pour recevoir et décoder le signal correspondant à une image distante j transmise par ce réseau TR.

Les dispositifs de codage-décodage classiques tels que représentés sur la figure 1 permettent de mettre en oeuvre des algorithmes hybrides (c'est-à-dire des algorithmes qui combinent plusieurs techniques de compression d'image, à savoir un algorithme à prédiction-transformation), mais sont malheureusement encombrants du fait de la complexité de traitement que requièrent de tels algorithmes.

Le dispositif de codage-décodage selon l'invention a pour but de remédier à cet inconvénient. Il permet en outre de mieux répartir les traitements afin de diminuer les charges de calcul de certains circuits.

Il permet par ailleurs de répondre avantageusement à la norme CCITT H261.

La présente invention a plus précisément pour objet un dispositif de codage-décodage de signaux d'image par prédiction-transformation comportant des moyens de codage de signaux d'image à transmettre et des moyens de décodage de signaux d'image reçus, ces signaux étant transmis au moyen d'un réseau de transmission de débit donné, dispositif dans lequel les moyens de codage sont constitués d'une boucle de codage des images décomposées en blocs qui comporte :
- un codeur comprenant des moyens de transformation et d'identification pour coder la différence entre chaque bloc d'une image locale et le bloc correspondant de l'image locale précédente,
- un décodeur comprenant des moyens de transformation inverse et de quantification inverse permettant de décoder chaque bloc d'image pour reconstituer ces blocs afin de les soustraire au bloc de l'image suivante,

caractérisé en ce que les moyens de décodage d'image distante reçue sont constitués par le décodeur de la boucle de codage d'image locale, ce décodeur assurant ainsi le décodage des blocs d'image locale et le décodage des blocs d'image distante.

Selon une deuxième caractéristique du dispositif de codage-décodage, les moyens de transformation et de transformation inverse sont réalisés par un même dispositif et, de la même façon, les moyens de quantification et de quantification inverse sont réalisés également par un même dispositif, de sorte que le décodage est réalisé par le codeur, ce qui contribue à réduire encore l'encombrement du dispositif de codage-décodage conforme à l'invention.

Selon une autre caractéristique de l'invention, la boucle de codage du codeur-décodeur comprend :
- un système multiprocesseur dans lequel les processeurs sont reliés entre eux par des liaisons bidirectionnelles et par un bus commun bidirectionnel,
- un registre tampon double pour adapter les flux des données transmises et/ou reçues entre le dispositif et le réseau de transmission.

Selon une autre caractéristique du dispositif de codage-décodage, le système multiprocesseur comprend :
- une première mémoire d'image contenant les blocs de l'image à traiter,
- une deuxième mémoire d'image contenant les blocs de l'image précédente,
- une troisième mémoire d'image contenant les blocs d'image distante décodée,
- un premier processeur de signal pour effectuer la différence entre des blocs se correspondant, lus dans les première et deuxième mémoires,
- un deuxième processeur pour, d'une part effectuer les quantifications directes des coefficients transformés de blocs d'image locale et une quantification inverse de ces blocs et, d'autre part, effectuer une quantification inverse des blocs d'image distante reçue,
- le dispositif de transformation qui est apte à obtenir des coefficients transformés de la différence issus du premier processeur et à obtenir la transformation inverse des données issues du deuxième processeur.

Selon une autre caractéristique du dispositif de codage-décodage, le système multiprocesseur comprend en outre :
- un troisième processeur de signal pour calculer les vecteurs de déplacement entre une nouvelle image locale et une image locale précédente,
- un quatrième processeur de signal pour, d'une part effectuer un codage entropique des coefficients quantifiés et un multiplexage des données codées afin de les transmettre sur le réseau et, d'autre part, démultiplexer les données reçues et décoder le codage entropique de ces données.

Selon une autre caractéristique du dispositif de codage-décodage, le système multiprocesseur comporte également une quatrième et une cinquième mémoires d'image, ces mémoires jouant respectivement un rôle identique aux première et deuxième mémoires, la duplication permettant d'éviter les conflits d'accès entre les premier et troisième processeurs.

Selon une autre caractéristique du dispositif de codage-décodage, le système multiprocesseur comporte un cinquième processeur de signal pour effectuer un post-traitement sur les données issues de la troisième mémoire d'image et une sixième mémoire d'image pour mémoriser ces données.

Selon une autre caractéristique, le dispositif de codage-décodage comporte en outre un convertisseur analogique/numérique pour le signal d'image locale à transmettre, suivi d'un filtre deux dimensions et un convertisseur numérique/analogique des données correspondant au signal reçu d'image distante.

L'ensemble des caractéristiques et avantages de l'invention ressortiront mieux de la description qui va suivre, donnée à titre d'exemple illustratif mais non limitatif, en référence aux dessins annexés sur lesquels :
- la figure 1 représente un schéma de principe d'un codeur-décodeur selon l'art antérieur,
- la figure 2 représente un schéma de principe d'un codeur-décodeur selon l'invention,
- la figure 3 représente le schéma d'une voie de codage classique sous forme de blocs fonctionnels,
- la figure 4 représente le schéma d'une voie de décodage classique sous forme de blocs fonctionnels,
- la figure 5 représente le schéma de réalisation d'un codeur-décodeur selon l'invention,
- la figure 6 représente une variante du schéma de réalisation du codeur-décodeur selon l'invention.

On a représenté sur la figure 1 le schéma de principe de codage-décodage selon l'art antérieur. Un codeur-décodeur selon l'art antérieur comporte une voie de codage CODi pour le signal d'image i issu d'une entrée vidéo et destiné à être transmis par un réseau de transmission TR. Cette voie comporte également une boucle dans laquelle est placé un décodeur DCODi de l'image i.

Le codeur-décodeur comporte également une voie de décodage DCODj des images transmises j par le réseau de transmission TR et destinées à être visualisées, le signal d'image étant pris sur la sortie vidéo de cette voie de décodage.

Dans tout le reste de la description, on entendra par image locale l'image appliquée à l'entrée vidéo de la voie de codage et destinée à être transmise pour être visualisée en bout de transmission. On entendra par image distante ou signal d'image distante, le signal envoyé par un autre moyen de codage-décodage et transmis par le réseau de transmission pour, en fin de traitement, se trouver à la sortie vidéo.

La figure 2 représente donc le schéma de principe d'un codeur-décodeur selon l'invention. Le codeur-décodeur comporte une voie de codage CODi qui reçoit le signal d'image i issu de l'entrée vidéo pour le transmettre sur le réseau de transmission TR et une voie de décodage DCODi,j qui va permettre de décoder en partage de temps , soit l'image locale i issue du codeur DCODi, soit l'image distante j transmise par le réseau de transmission.

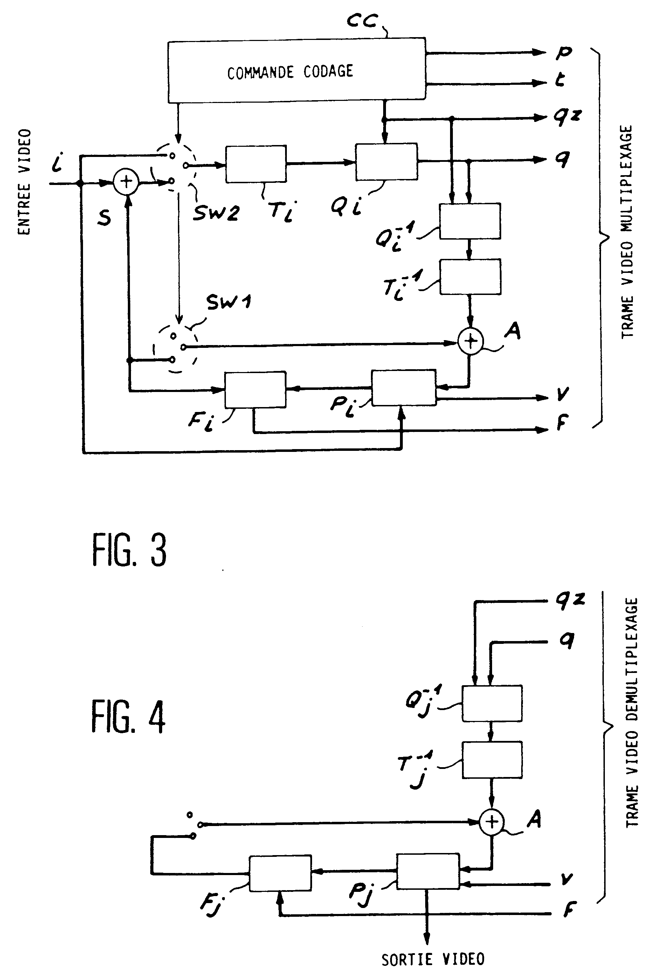

Sur la figure 3, on a représenté le schéma d'un codeur permettant de mettre en oeuvre un algorithme hybride à prédiction-transformation.

Ce schéma est sous forme de blocs fonctionnels dont on trouvera une description détaillée dans la demande de brevet française publiée sous le N° 2 597 282. On pourra également se reporter à la demande de brevet française publiée sous le numéro 2 589 020 pour les détails concernant la décomposition des images en blocs de données numériques, la transformation de ces données numériques dans le domaine fréquentiel par application d'une transformation de type orthogonal, telle qu'une transformée en cosinus ou une transformée de Fourier ou de Hadamard ou autre.

Ce schéma comporte donc un soustracteur S relié à l'entrée vidéo, qui reçoit le signal d'image i, suivi d'un moyen de transformation Ti permettant de transformer les données correspondant à chaque bloc en coefficient transformé.

Le dispositif de transformation Ti est suivi d'un dispositif de quantification Qi qui permet d'effectuer une quantification sur ses coefficients. Le codeur comporte également une boucle de codage dans laquelle des moyens de quantification inverse Q⁻¹i sont prévus pour effectuer une quantification inverse du signal de sortie du moyen de quantification Qi.

Il comporte également des moyens de transformation inverse T⁻¹i qui opère une transformation inverse sur les données issues des moyens de quantification Q⁻¹i. Les données issues de ces moyens de transformation inverse sont appliquées à une entrée d'un additionneur A dont une sortie est appliquée à une mémoire d'image Pi suivie d'un filtre de boucle Fi dont la sortie est appliquée à une deuxième entrée du soustracteur S. Le filtre peut être mis en service ou non par des moyens symbolisés par le commutateur SW1.

Des moyens symbolisés par le commutateur SW2 permettent de mettre en fonction ou non la boucle de décodage.

Des moyens de commande de codage CC sont prévus pour choisir le mode de codage, c'est-à-dire mettre en fonction ou non le filtre de boucle ou la bouc le de codage.

Les signaux de sortie du décodeur forment la trame du signal-transmis par multiplexage sur le réseau. La donnée p représente l'information de choix du mode de codage d'un bloc inter-trame ou intra-trame. t représente l'information de transmission ou non transmission, qz représente l'information de l'indication du quantificateur, q représente l'index de quantification pour les coefficients transformés, v représente le vecteur déplacement, s représente l'information de mise en service ou non du filtre de boucle.

Sur la figure 4, on a représenté un décodeur pour un signal d'image distante transmis par le réseau de transmission. Ce décodeur comporte un opérateur de quantification Q⁻¹j inverse qui reçoit l'information indication du quantificateur qz et l'information d'index de quantification q pour les coefficients transformés. Cet opérateur Q⁻¹j est suivi de moyens de transformation T⁻¹j qui opèrent la transformée inverse de la transformée qui a été appliquée par les moyens de codage en ligne par le réseau de transmission. Les signaux de sortie sont appliqués à une entrée d'un additionneur A. Cet additionneur est suivi d'une mémoire d'image Pj, laquelle est suivie d'un filtre de boucle Fj qui reçoit une information f de mise en service ou non du filtre de boucle. La mémoire d'image Pj recevant des vecteurs déplacement v.

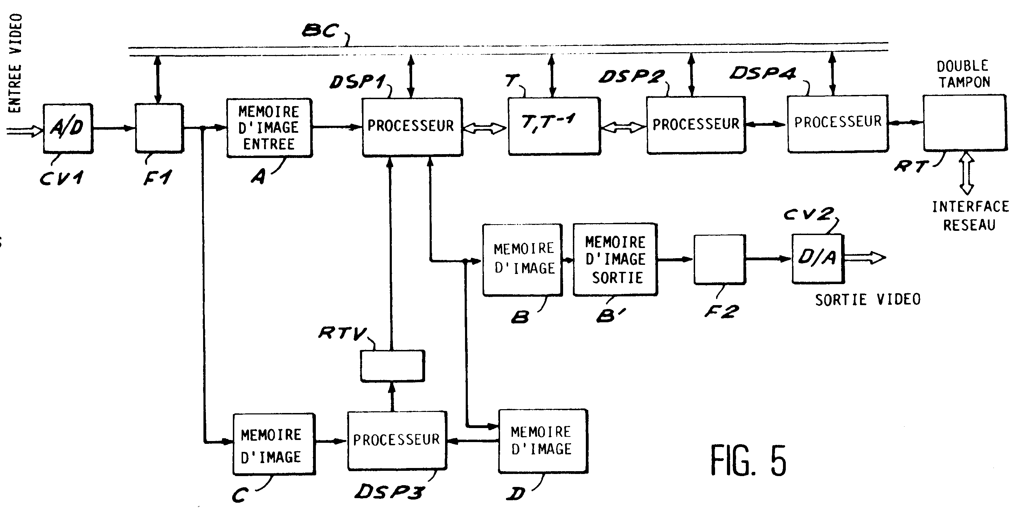

La figure 5 représente un mode de réalisation d'un codeur-décodeur selon l'invention. Conformément à l'invention, la partie décodage d'une image distante reçue, telle qu'elle est réalisée à partir du schéma de blocs fonctionnels de la figure 4 est réalisée par la boucle de décodage représentée sur la figure 3.

Conformément à l'invention, le codeur-décodeur permet par conséquent d'effectuer un codage des signaux d'image en vue de réduire le débit des informations destinées à être transmises et, d'autre part, d'effectuer à la fois le décodage local des données envoyées en ligne pour reconstruire l'image mémorisée dans la boucle de codage, cette image devant être identique à l'image construite par le décodeur distant, et également d'effectuer le décodage des données qui arrivent du codeur distant de façon à reconstruire l'image envoyée à l'autre bout de ligne.

Dans l'application visiophone l'image locale et l'image distante sont celles que décident de se transmettre deux abonnés distants en communication.

Le codeur-décodeur selon l'invention est muni d'une boucle de codage comprenant un système multiprocesseur dans lequel les processeurs sont reliés entre eux par des liaisons bidirectionnelles et par un bus commun bidirectionnel. La boucle de codage comporte en outre un registre tampon RT double pour adapter les flux de données transmises et/ou reçues entre le dispositif et le réseau de transmission.

Le système multiprocesseur comprend une première mémoire d'image A contenant les blocs de l'image à traiter, une deuxième mémoire d'image B contenant les blocs de l'image précédente, une troisième mémoire d'image B′ contenant les blocs d'image distante décodée, un premier processeur de signal DSP1 pour effectuer la différence entre des blocs se correspondant lus dans les première et deuxième mémoires, un deuxième processeur DSP2 pour, d'une part effectuer une quantification directe Q des coefficients transformés de blocs de l'image locale et une quantification inverse Q⁻¹ de ces blocs et, d'autre part, effectuer une quantification inverse Q⁻¹ des blocs d'image distante reçue. Il comporte également un dispositif de transformation T, T⁻¹, apte à obtenir les coefficients transformés de la différence issue du premier processeur DSP1 et à obtenir la transformation inverse des données issues du deuxième processeur DSP2.

Le système multiprocesseur comporte en outre un troisième processeur de signal DSP3 pour calculer les vecteurs déplacement entre une nouvelle image locale et l'image locale précédente, un quatrième processeur de signal DSP4 pour, d'une part effectuer un codage entropique des coefficients quantifiés et effectuer un multiplexage des données codées à transmettre sur le réseau et, d'autre part, démultiplexer les données reçues et décoder le codage entropique de ces données.

Le choix d'un dispositif de transformation susceptible d'effectuer la transformation T et la transformation inverse T⁻¹ permet donc, à partir du même dispositif de codage, d'effectuer également le décodage de ces informations, ce qui contribue à une réduction de l'encombrement du codeur-décodeur.

Le choix d'un système multiprocesseur permet donc de répartir les tâches pour le traitement des données, et ainsi de réaliser un gain de temps dans ces traitements.

Le codeur-décodeur comporte en outre une quatrième C et une cinquième D mémoires d'image. Ces mémoires jouent respectivment un rôle identique aux première et deuxième mémoires. En effet, elles permettent de dupliquer les informations contenues dans les mémoires A et B et ainsi d'éviter les conflits d'accès entre les processeurs DSP1 et DSP3.

Les données délivrées par le processeur DSP3 au processeur DSP1 transitent par un registre tampon RTV. Ce registre tampon stocke par conséquent provisoirement les vecteurs mouvement.

La liaison entre le processeur DSP1 et le dispositif de transformation T, T⁻¹, est bidirectionnelle. La liaison entre le processeur DSP2 et ce dispositif T, T⁻¹ est également bidirectionnelle, de même que les liaisons entre le processeur DSP2, DSP4 et entre le processeur DSP4 et le registre tampon RT.

Le processeur DSP1, le dispositif T, T⁻¹, le processeur DSP2, le processeur DSP4, sont reliés de façon bidirectionnelle à un bus commun BC. Le registre tampon RT est relié à une interface réseau qui n'est pas représentée mais qui est classique en soi.

La mémoire d'image A reçoit les données d'image issues d'un filtre F1 à deux dimensions, lequel reçoit les signaux d'image numérique obtenus après conversion au moyen d'un convertisseur analogique/numérique CV1.

La mémoire d'image B′ délivre les données correspondant à l'image distante destinée à être visualisée à un filtre F2 à deux dimensions, lequel transmet ces données numériques à un convertisseur numérique/analogique CV2 pour permettre la visualisation des images correspondantes.

Les différents traitements correspondant à l'application visiophone vont maintenant être plus détaillés.

La norme H261 couvre les débits allant de 48 kbit/s à 2 Mbit/s et prévoit deux formats d'image : CIF et quart CIF. Le format d'image CIF correspond à 360 points x 288 lignes, permet d'assurer une connexion numérique automatique entre les différentes régions du monde. Le format réduit QCIF est tout à fait approprié à la visiophonie. La puissance de calcul des processeur DSP1 à DSP4 permet de traiter des images QCIF soit 180 points x 144 lignes à cette fréquence.

Les mémoires d'image peuvent être dimensionnées pour des images au format CIF. Dans le cas d'image au format CIF, le codeur traite environ deux images/s, ce qui est acceptable pour la télésurveillance, mais plus difficilement acceptable pour le visiophone, sauf pour la visualisation des documents. L'architecture du dispositif est inchangée quel que soit le format d'image choisi, seule la puissance des processeurs doit être augmentée dans le cas du format CIF.

Les données arrivant à la mémoire d'entrée A arrivent au rythme de 50 images/s. De manière classique, on isole une image sur N car le codeur ne travaille pas assez vite pour traiter toutes les images. Selon l'application particulière décrite, N vaut 5.

Par ailleurs, le débit en ligne est de l'ordre de 60 Kbit/s et ne permet pas de coder toutes les images. Pour des débits plus élevés et des puissances de calcul supérieures, l'architecture décrite précédemment reste valable lorsque toutes les images sont codées.

De manière classique, les images sont décomposées en blocs de taille 16 x 16 ou 8 x 8. Les calculs sont effectués par bloc. Le processeur DSP3 permet de calculer les vecteurs déplacement entre la nouvelle image, qui se trouve dans la mémoire d'image C, et l'image contenue dans la mémoire D. Ces vecteurs déplacement sont ensuite transmis au processeur DSP1 par le biais du registre RTV.

Le processeur DSP1 permet de :
- lire le bloc d'image à traiter dans la mémoire A,
- lire le bloc correspondant d'image de boucle stockée dans la mémoire B, cette lecture est effectuée à des adresses décalées en fonction des vecteurs déplacement correspondant à ces blocs,
- filtrer éventuellement ce bloc,
- effectuer la différence entre les blocs lus précédemment,
- transmettre ces différences au dispositif de transformées.

La transformée est une transformée en cosinus dans l'application qui est donnée.

Le processeur DSP2 permet de :
- récupérer les coefficients transformés à la sortie du dispositif de transformée en cosinus T,
- effectuer un seuillage variable sur les coefficients transformés (on trouvera une description détaillée de ce traitement dans la demande de brevet français déposée sous le N° 88 12186 du 219 septembre 1988),
- effectuer la quantification directe Q,
- transmettre les coefficients quantifiés au processeur DSP4.

Le processeur DSP4 permet d'effectuer le codage entropique, c'est-à-dire d'affecter un mot de code de longueur variable au coefficient (codage à deux dimensions) et de former la trame numérique (mise en place des entêtes d'images, de groupes, de blocs, de macroblocs, de manière classique).

Le processeur DSP2 permet d'autre part :
- la reconstruction des coefficients dans l'opération de quantification inverse Q⁻¹,
- la transmission des coefficients reconstruits au dispositif de transformée en cosinus pour que ce dernier effectue la transformée en cosinus inverse T⁻¹.

Le processeur DSP1 récupére alors les données du dispositif de transforme en cosinus, effectue l'addition avec blocs décalés, éventuellement filtrés (venant de la mémoire B), qu'il a conservées dans sa mémoire interne et écrit le résultat (un bloc de la nouvelle image reconstruite) dans les mémoires B et D.

Les opérations portent sur des blocs d'image. La notion de blocs est classique et a été décrite dans les demandes de brevets citées précédemment.

Le double registre tampon RT permet d'adapter les flux de données qui sont constants sur des réseaux à des débits fixes, à ceux du codeur-décodeur qui sont variables. Ces débits sont bien sûr égaux en moyenne.

La liaison entre le double registre RT et le processeur DSP4 est réversible ainsi que celle entre le processeur DSP4 et DSP2. La mémoire de boucle B est dupliquée de manière à ce que cette mémoire contienne l'image reconstruite du codeur et à ce que l'autre mémoire, celle de la mémoire B′, contienne celle du décodeur.

Les données qui arrivent du réseau sont démultiplexées par le processeur DSP4 qui travaille en temps partagé entre ces fonctions de multiplexage et de démultiplexage. Le partage de tâches se fait au niveau des macroblocs. Les coefficients sont alors transmis au processeur DSP2 qui effectue les mêmes opération que pour le décodeur local. Lorsque le processeur DSP1 reçoit les données à la sortie de la transformation inverse, il exécute les opération suivantes :
- lecture du bloc correspondant aux données reçues dans la mémoire B′ à des adresses décalées en fonction du vecteur mouvement transmis par le processeur DSP4 au moyen du bus commun,
- filtrage éventuel de ce bloc,
- addition des données reçues au bloc qui vient d'être lu, et éventuellement filtrées,
- écriture du résultat dans la mémoire B′.

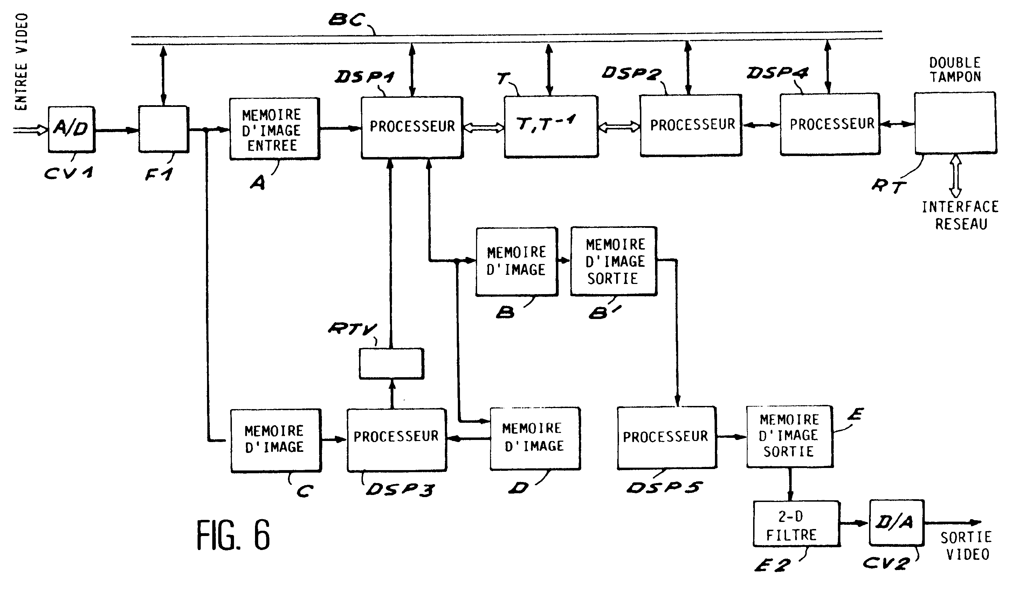

La figure 6 correspond à une variante de réalisation du codeur-décodeur selon la figure 5. Cette figure comporte les mêmes éléments que ceux de la figure 5 (ces mêmes éléments portent les mêmes références) et deux éléments supplémentaires correspondant à cette variante. Il s'agit d'un processeur de signal DSP5 et d'une mémoire d'image E. Le processeur de signal DSP5 permet d'effectuer un traitement appelé post traitement dont on trouvera une description dans les demandes de brevets français publiées sous les numéros FR 2589020 et FR 2599577. Le contenu de la mémoire B′ peut donc être visualisé directement ou bien par l'intermédiaire du processeur DSP5 et de la mémoire d'image E rajoutée.

Dans les deux réalisations qui viennent d'être décrites, on utilise des filtres à deux dimensions F1 et F2, nécessaires dans l'application particulière qui a été donnée à titre d'exemple, pour effectuer les changements de format d'image. Ces filtres ne jouent pas de rôle particulier dans l'architecture décrite autre que celui de ce changement de format CIF et QCIF.

Le codeur-décodeur selon l'invention permet de réduire considérablement l'encombrement des dispositifs habituellement utilisés dans ce type d'application. En effet, la partie décodage de l'image locale permet également de traiter les images distantes.

Selon un autre aspect de l'invention, la charge de travail de la partie décodeur est mieux utilisée que dans les décodeurs classiques. En effet, dans la partie codeur, les blocs fixes, c'est-à-dire ceux pour lesquels tous les coefficients sont nuls à la sortie du dispositif de transformée en cosinus, n'ont pas à être quantifiés puis déquantifiés etc.. si bien que le processeur de signal DSP2 ne fait rien pour ces blocs particuliers. Or ces derniers représentent au moins 30 % de l'ensemble des images codées à 64Kbit/s. Cette diminution de la charge de calcul du processeur DSP2 est mise à profit pour traiter les blocs reçus (qui eux aussi sont au plus 70 % en moyenne à être non fixes). La charge de travail du processeur DSP2 est donc mieux utilisée.

En cas de surcharge (exemple d'une image entièrement codée en intra où tous les blocs doivent être décodés), la priorité est donnée au décodeur qui traitera d'abord les blocs de l'image distante. L'image locale en cours peut dans ce cas être interrompue. Il en résulte un retard ou, au pire, une image manquera côté codeur. Cette solution n'est absolument pas gênante pour la visualisation.

Quelques exemples de référence de dispositif sont donnés à titre d'exemple pour les réalisations qui viennent d'être décrites. Les processeurs DSP1 à DSP5 peuvent être des dispositifs Motorola 56001. Le circuit de transformation en cosinus directe et inverse peut être un circuit TV3200 de SGS THOMSON. Les filtres F1 et F2 sont des filtres 2D ASIC par exemple de chez THOMSON. Le processeur DSP4 peut être le circuit Texas TMS320C25.

Bien entendu, le mode particulier de réalisation qui vient d'être indiqué n'est qu'un exemple, le dispositif selon l'invention peut être réalisé avec des composants standards, spécifiques ou DSP conformément à l'exemple donné.

## Revendications

1. Dispositif de codage-décodage de signaux d'image par prédiction-transformation comportant des moyens de codage de signaux d'image locale à transmettre et des moyens de décodage de signaux d'image distante reçue, ces signaux étant transmis au moyen d'un réseau de transmission de débit donné, dispositif dans lequel les moyens de codage sont constitués d'une boucle de codage d'image décomposée en blocs qui comporte :
- un codeur comprenant des moyens (T) de transformation et de quantification (Q) pour coder la différence entre chaque bloc d'une image locale et le bloc correspondant de l'image locale précedente,
- un décodeur comprenant des moyens (T⁻¹) de transformation inverse et de quantification inverse (Q⁻¹) permettant de décoder chaque bloc d'une image pour reconstituer ces blocs afin de les soustraire aux blocs de l'image suivante,
caractérisé en ce que les moyens de décodage d'image distante reçue sont constitues par le décodeur de la boucle de codage d'image locale, ce décodeur assurant ainsi le décodage des blocs d'image locale et le décodage des blocs d'image distante.

2. Dispositif de codage-décodage selon la revendication 1, caractérisé en ce que des moyens de transformation (T) et de transformation inverse (T⁻¹) sont réalisés par un même dispositif, les moyens de quantification et de quantification inverse sont également réalisés par un même dispositif, de sorte que le décodage est réalisé par le codeur.

3. Dispositif de codage-décodage selon la revendication 1 ou 2, caractérisé en ce que le codeur et le décodeur de la boucle de codage comprend :
- un système multiprocesseur dans lequel les processeurs sont reliés entre eux par des liaisons bidirectionnelles et par un bus commun bidirectionnel (BC),
- un registre tampon (RT) double pour adapter des flux des données transmises et/ou reçues entre le dispositif et le réseau de transmission.

4. Dispositif de codage-décodage selon la revendication 1 ou 2, caractérisé en ce que le système multiprocesseur comprend :
- une première (A) mémoire d'image contenant les blocs de l'image à traiter,
- une deuxième (B) mémoire d'image contenant les blocs de l'image précédente,
- une troisième (B′) mémoire d'image contenant les blocs d'image distante décodée,
- un premier processeur de signal (DSP1) pour effectuer la différence entre des blocs se correspondant lus dans les première et deuxième mémoires,
- un deuxième processeur (DSP2) pour, d'une part effectuer une quantification directe (Q) des coefficients transformés de blocs d'image locale et une quantification inverse (Q⁻¹) de ces blocs et, d'autre part, effectuer une quantification inverse (Q⁻¹) des blocs d'image distante reçue,
- le dispositif de transformation (T, T⁻¹) qui est apte à obtenir des coefficients transformés de la différence issue du premier processeur (DSP1) et à obtenir la transformation inverse des données issues du deuxième processeur (DSP2).

5. Dispositif de codage-décodage selon la revendication 3, caractérisé en ce que le système multiprocesseur comprend en outre :
- un troisième processeur de signal (DSP3) pour calculer les vecteurs déplacement entre une nouvelle image locale et l'image locale précedente,
- un quatrième processeur de signal (DSP4) pour, d'une part effectuer un codage entropique des coefficients quantifiés et un multiplexage des données codées afin de les transmettre sur le réseau et, d'autre part, démultiplexer les données reçues et décoder le codage entropique de ces données.

6. Dispositif de codage-décodage selon la revendication 3 ou la revendication 4, caractérisé en ce que le système multiprocesseur comporte également une quatrième (C) et cinquième (D) mémoires d'image, ces mémoires jouant respectivement un rôle identique aux première et deuxième mémoires, la duplication permettant d'éviter les conflits d'accès entre les premier et troisième processeurs (DSP1, DSP3).

7. Dispositif de codage-décodage selon l'une quelconque des revendications 1 à 6, caractérisé en ce qu'il comporte un cinquième processeur de signal (DSP5) pour effectuer un post-traitement sur les données issues de la troisième mémoire d'image (B′) et une sixième mémoire d'image (E) pour mémoriser ces données.

8. Dispositif de codage-décodage selon l'une quelconque des revendications 1 à 6, caractérisé en ce qu'il comporte en outre un convertisseur analogique-numérique (CV1) pour le signal d'image locale à transmettre, suivi d'un filtre 2D (F1) et un convertisseur numérique-analogique (CV2) des données correspondant au signal reçu d'image distante.

## Patentansprüche

1. Vorrichtung zur Codierung-Decodierung von Bildsignalen mittels Prädiktion-Transformation, umfassend Codiereinrichtungen von den zu übertragenden Signalen eines örtlichen Bildes und Decodiereinrichtungen von empfangenen Signalen eines entfernten Bildes, wobei diese Signale übertragen werden durch ein Übertragungsnetz einer gegebenen Leistung, wobei die Codiereinrichtungen dieser Vorrichtung gebildet werden durch eine Codierschleife eines in Blöcke zerlegten Bildes, die umfaßt:
- einen Codierer, Transformationseinrichtungen (T) und Quantifizierungseinrichtungen (Q) umfassend, um die Differenz zwischen jedem Block eines örtlichen Bildes und dem entsprechenden Block des vorhergehenden örtlichen Bildes zu codieren,
- einen Decodierer, inverse Transformationseinrichtungen (T⁻¹) und inverse Quantifizierungseinrichtungen (Q⁻¹) umfassend, die ermöglichen, jeden Block eines Bildes zu decodieren, um diese Blöcke wiederherzustellen, um sie von den Blöcken des nachfolgenden Bildes zu subtrahieren,
**dadurch gekennzeichnet**, daß die
Decodiereinrichtungen des empfangenen entfernten Bildes gebildet werden durch den Decodierer der Codierschleife des örtlichen Bildes, wobei dieser Decodierer somit die Decodierung der Blöcke des örtlichen Bildes gewährleistet und die Decodierung der Blöcke des entfernten Bildes.

2. Codier-Decodiervorrichtung nach Anspruch 1, dadurch gekennzeichnet, daß die Einrichtungen der Transformation (T) und der inversen Transformation (T⁻¹) realisiert sind durch ein und dieselbe Vorrichtung und die Einrichtungen der Quantifizierung und der inversen Quantifizierung ebenfalls realsiert sind durch ein und dieselbe Vorrichtung, so daß die Decodierung durch den Codierer realisiert wird.

3. Codier-Decodiervorrichtung nach Anspruch 1 oder 2, dadurch gekennzeichnet, daß der Codierer und der Decodierer der Codierschleife umfaßt:
- ein Multiprozessorsystem, bei dem die Prozessoren miteinander verbunden sind durch bidirektionelle Verbindungen und durch einen gemeinsamen bidirektionellen Bus (BC),
- ein Doppel-Pufferregister (RT), um Flüsse von zwischen der Vorrichtung und dem Übertragungsnetz übertragenen und/oder empfangenen Daten anzupassen.

4. Codier-Decodiervorrichtung nach Anspruch 1 oder 2, dadurch gekennzeichnet, daß das Multiprozessorsystem umfaßt:
- einen ersten (A) Bildspeicher, der die Blöcke des zu verarbeitenden Bilds enhält,
- einen zweiten (B) Bildspeicher, der die Blöcke des vorhergehenden Bilds enthält,
- einen dritten (B′) Bildspeicher, der die Blöcke des decodierten, entfernten Bilds enthält,
- einen ersten Signalprozessor (DSP1), um die Differenz auszuführen zwischen den sich entsprechenden Blöcken, gelesen in dem ersten und dem zweiten Speicher,
- einen zweiten Prozessor (DSP2), um einerseits eine direkte Quantifizierung (Q) der transformierten Koeffizienten der örtlichen Bildblöcke durchzuführen und eine inverse Quantifizierung (Q⁻¹) dieser Blöcke, und andererseits eine inverse Quantifizierung (Q⁻¹) der Blöcke des empfangenen entfernten Bildes durchzuführen,
- die Transformationvorrichtung (T, T⁻¹), die fähig ist, transformierte Koeffizienten von der vom ersten Prozessor (DSP1) abgeleitenten Differenz zu erhalten, und die inverse Transformation der vom zweiten Prozessor (DSP2) abgeleiteten Daten zu erhalten.

5. Codier-Decodiervorrichtung nach Anspruch 3, dadurch gekennzeichnet, daß das Multiprozessorsystem außerdem umfaßt:
- einen dritten Signalprozessor (DSP3), um die Verschiebungsvektoren zwischen einem neuen örtlichen Bild und einem vorhergehenden örtlichen Bild zu berechnen,
- einen vierten Signalprozessor (DSP4), um einerseits eine entropische Codierung der quantifizierten Koeffizienten durchzuführen und ein Multiplexing der codierten Daten, um sie auf dem Netz zu übertragen, und andererseits die empfangenen Daten zu demultiplexen und die entropische Codierung dieser Daten zu decodieren.

6. Codier-Decodiervorrichtung nach Anspruch 3 oder Anspruch 4, dadurch gekennzeichnet, das das Multiprozessorsystem ebenfalls einen vierten (C) und fünften (D) Bildspeicher umfaßt, wobei diese Speicher jeweils eine dem ersten und zweiten Speicher identische Rolle spielen, wobei die Verdopplung es ermöglicht, Zugriffskonflikte zwischen dem ersten und dem dritten Prozessor (DSP1, DSP3) zu vermeiden.

7. Codier-Decodiervorrichtung nach einem der Ansprüche 1 bis 6, dadurch gekennzeichnet, daß sie einen fünften Signalprozessor (DSP5) umfaßt, um an den vom dritten Bildspeicher (B′) stammenden Daten eine Nachverarbeitung durchzuführen, und einen sechsten Bildspeicher (E), um diese Daten zu speichern.

8. Codier-Decodiervorrichtung nach einem der Ansprüche 1 bis 6, dadurch gekennzeichnet, daß sie außerdem einen AnalogDigital-Wandler (CV1) für das zu übertragende örtliche Bildsignal umfaßt, gefolgt von einem Filter 2D (F1) und einem Digital-Analog-Wandler (CV2) der Daten, die dem empfangenen Signal des entfernten Bilds entsprechen.

## Claims

1. Apparatus for the coding-decoding of image signals by prediction transformation having means for coding the image signals to be transmitted and means for decoding the image signals received, said signals being transmitted by means of a transmission network having a given speed, wherein the coding means are constituted by a coding loop for the images broken down into blocks and which has a coder incorporating transformation (T) and quantization (Q) means for coding the difference between each block of a local image and the corresponding block of the preceding local image and a decoder incorporating reverse transformation (T⁻¹) and reverse quantization (Q⁻¹) means making it possible to decode each image block so as to reconstitute said blocks, so as to subtract them from the block of the following image, characterized in that the means for decoding the remote image received are constituted by the decoder of the local image coding loop, said decoder thus ensuring the decoding of the local image blocks and the decoding of the remote image blocks.

2. Coding-decoding apparatus according to claim 1, characterized in that the transformation means (T) and reverse transformation means (T⁻¹) are formed by the same device, the quantization and reverse quantization means also being provided by the sane device, so that decoding is carried out by the coder.

3. Coding-decoding apparatus according to claims 1 or 2, characterized in that the coder and decoder of the coding loop comprises a multiprocessor system in which the processors are interconnected by bidirectional links and by a common bidirectional bus (BC) and a double buffer register (RT) for adapting transmitted and/or received data flows between the apparatus and the transmission network.

4. Coding-decoding apparatus according to claims 1 or 2, characterized in that the multiprocessor system comprises a first (A) image memory containing the blocks of the image to be processed, a second (B) image memory containing the blocks of the preceding image, a third (B′) image memory containing the decoded remote image blocks, a first signal processor (DSP1) for forming the difference between corresponding blocks read into the first and second memories, a second processor (DSP2) for on the one hand carrying out direct quantizations (Q) of the transformed coefficients of local image blocks and a reverse quantization (Q⁻¹) of these blocks and on the other hand carrying out a reverse quantization (Q⁻¹) of the received remote image blocks and a transformation device (T, T⁻¹) able to obtain transformed coefficients of the difference from the first processor (DSP1) and obtain reverse transformation of data from the second processor (DSP2).

5. Coding-decoding apparatus according to claim 3, characterized in that the multiprocessor system also comprises a third signal processor (DSP3) for calculating the displacement vectors between a new local image and a preceding local image, a fourth signal processor (DSP4) for on the one hand carrying out an entropic coding of the quantized coefficients and a coded data multiplexing in order to transmit them on the network and on the other hand demultiplex the data received and decode the entropic coding of said data.

6. Coding-decoding apparatus according to claims 3 or 4, characterized in that the multiprocessor system also incorporates a fourth (C) and a fifth (D) image memories, said memories respectively fulfilling an identical function to the first and second memories, the duplication making it possible to avoid access conflicts between the first and third processors (DSP1, DSP3).

7. Coding-decoding apparatus according to any one of the claims 1 to 6, characterized in that it has a fifth signal processor (DSP5) for carrying out a post-processing of the data from the third image memory (B′) and a sixth image memory (E) for storing said data.

8. Coding-decoding apparatus according to any one of the claims 1 to 6, characterized in that it has an analog-digital converter (CV1) for the local image signal to be transmitted, followed by a bidirectional filter (F1) and a digital-analog converter (CV2) for the data corresponding to the remote image signal received.
